# EUROPÄISCHE PATENTSCHRIFT

(11) **EP 1 479 146 B1**
(45) Veröffentlichungstag und Bekanntmachung des Hinweises auf die Patenterteilung: **27.02.2013**
(21) Anmeldenummer: 02800119.6
(22) Anmeldetag: 25.09.2002
(51) Int. Cl.: H02G 1/00

(54) **VORRICHTUNG ZUR AUFNAHME EINES VERSORGUNGSMITTELS AN EINEM ELEKTRISCHEN GERÄT**
DEVICE FOR RECEIVING A SUPPLY MEANS ON AN ELECTRIC APPLIANCE
DISPOSITIF SERVANT A LOGER UN MOYEN D'ALIMENTATION SOUS UN APPAREIL ELECTRIQUE

(30) Priorität: 01.10.2001 DE 20116107 U
(43) Veröffentlichungstag der Anmeldung: 24.11.2004
(73) Patentinhaber: BSH Bosch und Siemens Hausgeräte GmbH, 81739 München (DE)
(72) Erfinder: ZIBRET, Igor, 3327 Smartno ob Paki (SI); PESEC, Jurij, 3301 Petrovce (SI)
(86) Internationale Anmeldenummer: PCT/EP2002/010753
(87) Internationale Veröffentlichungsnummer: WO 2003/030325

(56) Entgegenhaltungen:
- DE-A- 2 846 339
- DE-A- 19 542 454
- US-A- 4 572 445

## Beschreibung

Die vorliegende Neuerung betrifft ein Gehäuseteil zur Aufnahme eines Versorgungsmittels an einem elektrischen Gerät, zur Aufnahme eines Kabels an einem Haushaltgerät.

Unter den Begriff des Haushaltgerätes fallen u.a. thermische Geräte, wie z.B. Toaster und Kaffeemaschinen, aber auch motorische Geräte, wie z.B. Kaffeemühlen und Saftpressen für Zitrusfrüchte, Küchenrühr-, Misch- und/oder Knetmaschinen. Aufgrund ihrer relativ hohen elektrischen Leistungsaufnahme müssen derartige Haushaltgeräte auch geringer Größe zum Betrieb stets über ein Versorgungsmittel mit einer Energiequelle verbunden werden. In der Regel wird ein Haushaltgerät mit einem Versorgungsmittel in Form eines Kabels mit einer Steckdose verbunden. Dabei ist das mit dieser Art der Energieversorgung verbundene Problem, eine je nach Einsatzort angepaßte Kabellänge zur Verfügung stellen zu können, je nach Preisklasse eines Haushaltgerätes unterschiedlich gelöst: Von alten Geräten her ist bekannt, dass ein Kabel mit einer freien Länge von ca. 1 m einfach mit einem Gummiband, einem Kabelbinder oder einer sonstigen, insbesondere lösbaren Manschette auf eine feste Länge zu einem Knäuel oder Bündel aufgewickelt und zusammengebunden wurde. Diese Lösung schützt das Kabel aber nicht vor etwaigen Beschädigungen oder vor Verschmutzung, sie ist auch hinsichtlich einer Änderung der freien Kabellänge sehr starr. In moderneren Geräten ist eine Vorrichtung zum Aufwickeln überschüssiger Kabellänge in einem Bereich vorgesehen, der einem Anwender abgewandt ist, wobei das Kabel aber auch in aufgewickeltem Zustand meist sichtbar bleibt. Alternativ ist bei einem verbessertem Schutz gegen Verschmutzung ein Raum in dem Haushaltgerät vorgesehen, in den überschüssige Kabellänge durch ein Loch hindurch in einen dafür vorgesehenen Leerraum hineingeschoben werden kann.

Als teuerste und auch benutzerfreundlichste Lösung mit hohem Bedienkomfort ist die Verwendung eines selbstaufwickelnden Kabelaufrollers mit einer federbelasteten oder sonstig angetriebenen Kabeltrommel aus dem Bereich der portablen größeren Haushaltgeräte bekannt, die insbesondere bei Staubsaugern und sonstigen Bodenpflegegeräten Einsatz findet. Nachfolgend wird einer derartige Vorrichtung nur noch als Kabeltrommel bezeichnet werden. Im Vergleich zu allen vorgenannten Lösungen wird ein Kabel auch bei einem wiederholten Aufwickeln auf einer Kabeltrommel am wenigsten stark gebogen, d.h. die minimalen Krümmungsradien sind hier in der Regel größer als z.B. beim Aufwickeln der freien Kabellänge zu einem Knäuel von Hand. Gerade bei häufiger Änderung einer freien Kabellänge oder einem häufigen Aufwickeln des Kabels wird hierdurch neben einem deutlich besseren Bedienkomfort die Lebensdauer des Kabels durch Verminderung von Kabelbrüchen erhöht. Die DE 195 42 454 A, beschreibt ein bekanntes Gehäuseteil.

Aufgrund ihrer für eine Anwender vergleichsweise unkomplizierten Handhabbarkeit und einem effektiven Schutz der überschüssigen Kabellänge in einem extra dafür in dem Haushaltgerät vorgesehenen Staubereich werden die beiden letztgenannten Lösungen in heutigen Haushaltgeräten bevorzugt eingesetzt. Auch ist eine überschüssige Kabellänge aufgrund der Lagerung im Geräteinnern nicht mehr sichtbar, wodurch ein optischer Gesamteindruck bzw. das Design eines Haushaltsgerätes nicht nachteilig beeinflußt werden kann.

Es ist Aufgabe der vorliegenden Neuerung, eine vorstehend beschriebene Vorrichtung zur Aufnahme eines Versorgungsmittels an einem elektrischen Gerät bei Verbesserung deren Handhabung weiterzubilden.

Diese Aufgabe wird erfindungsgemäß durch ein Gehäuseteil mit den Merkmalen von Anspruch 1 gelöst. Vorteilhafte Weiterbildungen der Erfindung sind Gegenstand der jeweiligen Unteransprüche.

Das erfindungsgemäße Gehäuseteil ist in Anspruch 1 definiert und sieht demnach vor, dass in dem elektrischen Gerät ein Hohlraum vorgesehen ist, der durch ein Abdeckmittel vorzugsweise in Form eines Deckels unter Bildung einer Kabelaustrittsöffnung überdeckt und/oder nach außen hin verschlossen ist. Dabei ist der Hohlraum insbesondere als ganzer in einem Gehäuse des Gerätes ausgebildet. Damit kann eine überschüssige Länge eines Elektrokabels an einem Haushaltgerät in definierter Weise aufgenommen werden, wobei der Hohlraum als Aufnahmeraum auch über den Deckel leicht zugänglich ist. Das Kabel kann somit unter jederzeitiger Anpassung seiner Länge sicher verwahrt werden, wobei der Hohlraum während und auch noch nach Abschluß der Fertigung zugänglich ist, auch für einen Austausch des Kabels. Da Gehäuse bei Haushaltgeräten in der Regel aus einem Kunststoff bestehen und dementsprechend elektrisch nicht leitend sind ist es darüber hinaus von Vorteil, dass der gesamte Hohlraum in dem Gehäuse ausgebildet ist und damit auch elektrisch isoliert ist. In der Fertigung wie im normalen Einsatz ist somit die Handhabung einer erfindungsgemäßen Vorrichtung gegenüber bekannten Vorrichtungen verbessert worden.

Erfindungsgemäß ist der Deckel zum Aufklappen und zum mindestens teilweisen Öffnen des Hohlraums und/oder des Geräts ausgebildet, wobei der Hohlraum Anschlußelemente für das Kabel enthält. Damit ist kein vollständiges Entfernen des Deckels mehr erforderlich, wenn in den Hohlraum eingegriffen werden muß. Damit wird in vorteilhafter Weise auch eine Montage, Demontage oder nachträgliche Auswechslung des Elektrokabels an dem Gerät dadurch erleichtert, dass ohne weitere Zerlegung des Gerätes bzw. dessen Gehäuses die entsprechenden Anschlußelemente für das Kabel in dem Hohlraum zugänglich sind. Ein derartiger Arbeitsvorgang ist damit durch die Konstruktion einer erfindungsgemäßen Vorrichtung sehr einfach gestaltet.

In einer bevorzugten Ausbildungsform der Erfindung sind zur Fixierung des Deckels Rastnasen und korrespondierende Ausnehmungen an dem Gehäuse und/oder dem Deckel vorgesehen. Damit ist ein schneller und zuverlässiger Zusammenbau eines Gehäuses des Gerätes ohne weitere Fixierungsmittel, wie z.B. Schrauben, Nieten etc., möglich.

Erfindungsgemäß ist der Hohlraum zur Aufnahme einer Kabeltrommel, die insbesondere als Modul ausgeführt ist. Alternativ kann auch die Kabelaufwicklung in ihrer Kontur dem Hohlraum angepaßt sein. Damit ist in einem Gerät ein modularer Aufbau dahingehend geschaffen worden, dass die Form eines einzigen Gehäuses für manuelle Kabelverstauung und automatische Kabelaufwicklung auf einer Trommel verwendet werden kann. Damit können zwei grundsätzlich verschiedene Preissegmente unter Verwendung von Modulen innerhalb einer Baureihe bedient werden, andererseits ist eine Umstellung eines Modelltyps oder einer Ausstattung in der Produktion problemlos möglich und sehr schnell durchführbar.

Vorzugsweise handelt es sich beim dem Gehäuse des Gerätes, in dem der Hohlraum ausgebildet ist, um ein Bodenstrukturteil. Derartige Gehäuseteile nehmen in bekannter Weise durch den Einsatz von internen Verstrebungen und/oder eine besonders auf mechanische Anforderungen angepaßte Materialauswahl und Formgebung wesentliche Aufgaben der Stabilisierung eines jeweiligen gesamten Gehäuses wahr. Ein Hohlraum einer erfindungsgemäßen Vorrichtung kann dementsprechend schon im Entwurf eines Bodenstrukturteils z.B. als Zwischenraum zwischen mehreren Verstrebungen eingeplant werden, insbesondere ohne wesentliche Vergrößerung des Bauteils.

In einer bevorzugten Ausbildungsform der Erfindung ist der Deckel als Teil einer Bodenabdeckung ausgeführt. Damit dient der Deckel unabhängig von der Art der Führung, Speicherung oder Aufwicklung in dem Hohlraum als Träger für das Kabel. Dabei fällt die Unterseite eines Gerätes naturgemäß für einen designerischen Gesamteindruck nur unwesentlich ins Gewicht, wobei eine geschlossene Unterseite bei Geräten zum Schutz gegen Staub, Wasser etc. generell angestrebt und hier durch den Deckel auch verwirklicht wird. An einer Unterseite des betreffenden Gerätes angeordnet wird das austretende und in seiner Länge flexibel einstellbare Kabelstück im wesentlichen in der Nähe einer jeweiligen Bodenoberfläche aus dem Gerät herausgeführt, so dass kein einem jeweiligen Design abträglicher Gesamteindruck entsteht. Auch werden auf diese Weise keine Stolperfallen oder andere Gefahrenstellen etc. in der Nähe des Gerätes gebildet.

Eine erfindungsgemäße Vorrichtung ermöglicht mithin den Einsatz eines einfachen Kabels wie auch einer automatischen Kabelaufwicklung in einem Haushaltgerät. Eine Einrichtung einer einem jeweiligen Einsatzort angepaßten Kabellänge ist in zeitgemäßer Form schnell und einfach möglich. Der erfindungsgemäß vorgesehene Hohlraum wird mit seiner Abdeckung somit gleichermaßen als Montageraum und als Stauraum in mindestens zwei unterschiedlich komfortablen Formen genutzt, ohne dass weitere Anpassungen an dem Gerät selber vorzunehmen wären.

Auch wenn im Rahmen der vorliegenden Beschreibung als Geräte vorzugsweise kleinere Haushaltgeräte behandelt werden, so ist ein Einsatz einer erfindungsgemäßen Vorrichtung auch an größeren Haushaltgeräte, wie z.B. einer Wäscheschleuder etc. möglich. Ferner erweist sich auch ein Einsatz in privat oder professionell in der Industrie genutzten Anlagen zur Datenverarbeitung als sehr vorteilhaft. Gerade im s.g. PC-Bereich erweist sich eine sichere Verlegung der zahlreichen Verbindungsleitungen und insbesondere eine zuverlässige Verwahrung überschüssiger Leitungslängen von Energieversorgungs- und Datenkabeln als ein großes Problem, das durch einen angepaßten Einsatz einer erfindungsgemäßen Vorrichtung wesentlich gemildert wird.

Nachfolgend werden Ausführungsbeispiele der Erfindung anhand der Zeichnung näher erläutert. In der Zeichnung zeigt:
- Figur 1:: eine skizzierte Darstellung einer dreidimensionalen Ansicht eines Bodenstrukturteils mit einem Hohlraum;
- Figur 2:: eine Ansicht eines Deckels zum bodenseitigen Verschließen des Hohlraums;
- Figur 3:: eine Skizze eines in dem Hohlraum zu verstauenden einfachen Elektrokabels;
- Figur 4:: eine Draufsicht auf eine Ausführungsform einer erfindungsgemäßen Vorrichtung unter Verwendung des einfachen Elektrokabels von Fig. 3;
- Figur 5:: eine Kabeltrommel zum automatischen Aufwickeln eines Elektrokabels;
- Figur 6:: eine Draufsicht auf eine Ausführungsform einer erfindungsgemäßen Vorrichtung unter Verwendung der Kabeltrommel von Fig. 5 und
- Figur 7:: eine seitliche Ansicht eines Gehäuses einer motorisch angetriebenen Küchenrühr- und Knetmaschine unter Verwendung eines erfindungsgemäß ausgestatteten Bodenstrukturteils nach einer der Figuren 1, 4 und/oder 6.

Eine erfindungsgemäße Vorrichtung 1 zur Aufnahme einer überschüssigen Länge eines Elektrokabels 2 an einem Haushaltgerät 3 umfaßt zwei Komponenten: einen Hohlraum 5, der in einem Gehäuse 6 des Gerätes 3 ausgebildet ist und einen Deckel 7, durch den der Hohlraum 5 bis auf eine Kabelaustrittsöffnung 9 geschlossen wird.

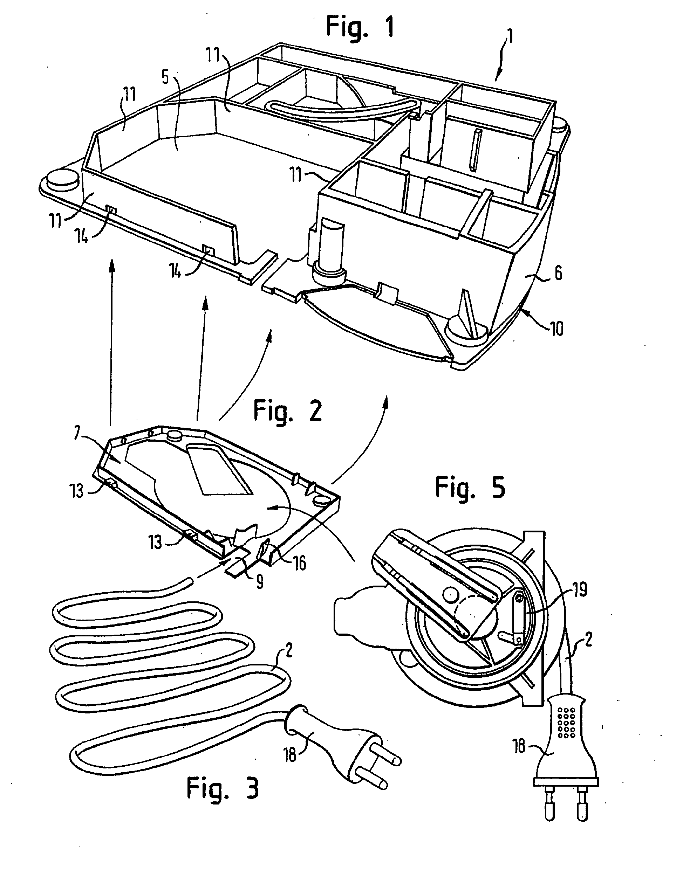

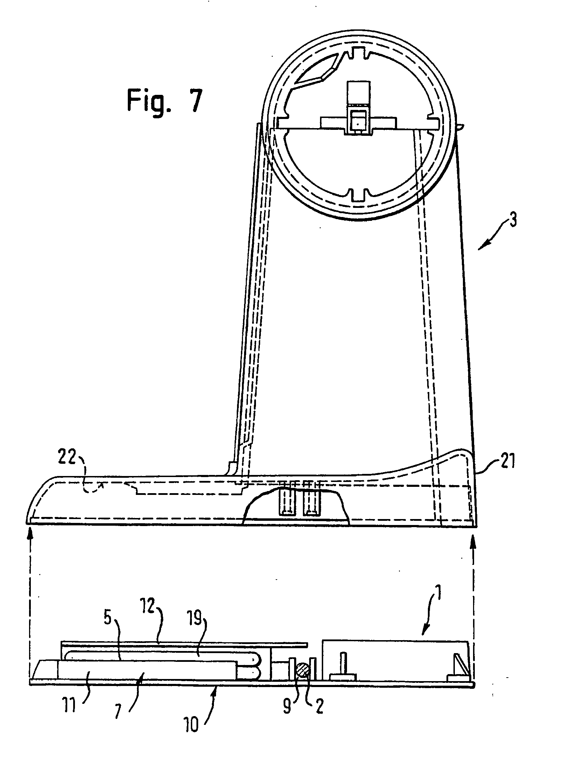

Figur 1 zeigt eine skizzierte Darstellung eines Bodenstrukturteils 10 mit einem Hohlraum 5 in einer dreidimensionalen Ansicht. Der Hohlraum ist als freier Zwischenraum zwischen Verstrebungen 11, die zur Versteifung des Bodenstrukturteils 10 dienen, ausgebildet. Je nach Ausführungsform ist an dem Bodenstrukturteil 10 auch noch eine Decke als oberer Abschluß vorgesehen. In dem in der Abbildung von Figur 1 dargestellten Ausführungsbeispiel fehlt die Decke und wird in einem zusammengebauten Zustand des Gehäuses 6 durch ein jeweiliges Oberteil 12 gebildet, wie noch anhand der Abbildung von Figur 7 dargestellt wird.

Figur 2 eine Ansicht eines Deckels 7 zum bodenseitigen verschließen des Hohlraums. Der Deckel 7 ist ein im wesentlichen ebenes Teil. Über Rastnasen 13, die im zusammengebauten Zustand in korrespondierende Ausnehmungen 14 an dem Gehäuse 6 eingerastet sind, ist der Deckel 7 dann lösbar mit dem Oberteil 12 zur Ausbildung eines bis auf die Kabelaustrittsöffnung 9 geschlossenen Hohlraums verbunden.

Im Bereich der Kabelaustrittsöffnung 9 sind an dem Deckel 7 Leit-, Führungs- und/oder Fixierelemente 16 vorgesehen, die eine Art von Einführtrichter bilden und im zusammengebauten Zustand federelastisch und insbesondere klemmend auf das Kabel 2 einwirken, um z.B. ein zu rasches oder auch unbeabsichtigtes Entgleiten, Herausziehen oder Herausschieben des Kabels 2 aus dem Hohlraum 5 zu verhindern.

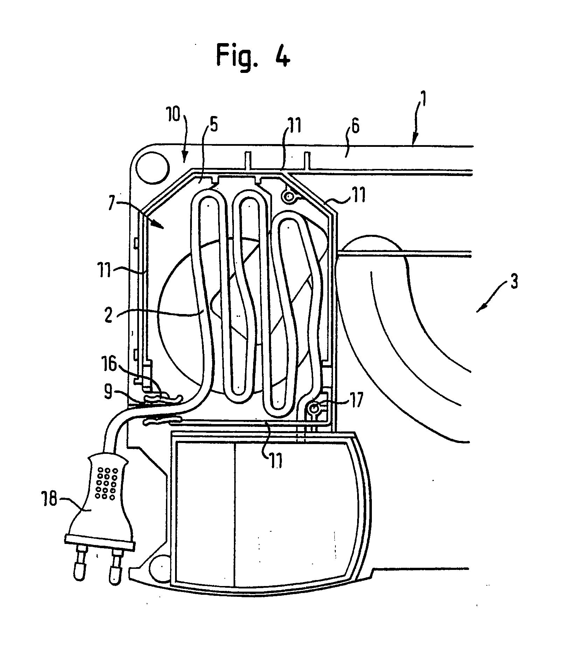

Figur 3 stellt ein einfaches Kabel 2 dar, das in einer skizzierten Meanderform in den Hohlraum 5 zur Abstimmung auf eine jeweils erwünschte Länge händisch eingeführt oder an einem Stecker 18 entnommen wird. Eine Draufsicht auf den Hohlraum 5 in dem Bodenstrukturteil 10 mit fast vollständig eingeführtem Kabel 2 ist in der Skizze von Figur 4 dargestellt. Nicht im Detail dargestellt sind in Figur 4 eine Zugentlastung und schließlich Anschlußelemente 17 zur Herstellung eines elektrischen Kontaktes zwischen dem Kabel 2 und den eigentlichen elektrischen Verbrauchern in dem Gerät 3. Die gesamte Vorrichtung 1 ist damit als integriertes Teil der Bodenabdeckung des Gerätes 3 ausgeführt. Auf den in jedem Fall durch die Kabelaustrittsöffnung 9 außerhalb des Hohlraums 5 liegenden Stecker 18 angepaßte Form. Insbesondere kann an dem Bodenstrukturteil einer Aufnahme zum Einlegen oder lösbaren Einklemmen des Steckers 18 vorgesehen sein.

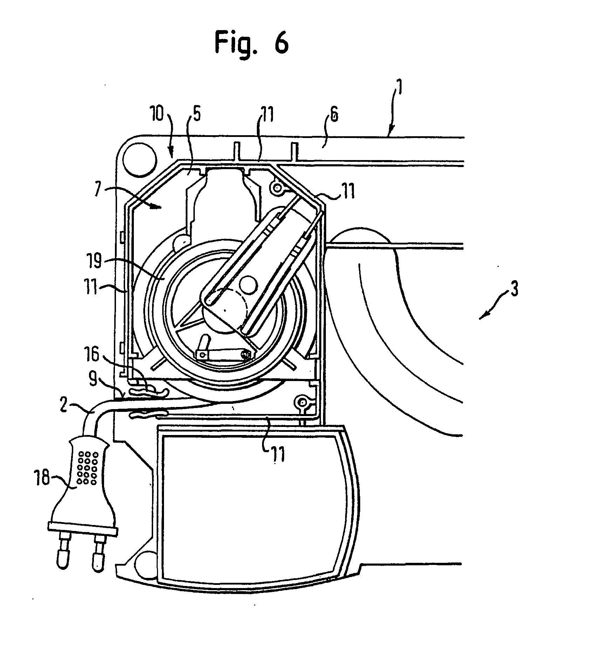

Als eine zweite Möglichkeit der Belegung des Hohlraums 5 ist in der Abbildung von Fig. 5 ein Kabel 2 dargestellt, das zur automatischen Kabelaufwicklung auf einer Kabeltrommel 19 angeordnet ist. Ein zusammengesetzter Zustand ist analog der Abbildung von Figur 4 in Figur 6 dargestellt. Hier wird eine wesentliche Bedingung für die Ausgestaltung des Hohlraums 5 und einer zum Innern des Hohlraums 5 gerichteten Oberfläche des Deckels 7 erkennbar: Es sind an den Verstrebungen 11 und dem Deckel 7 Ausnehmungen und Führungen oder Positionierungshilfen für den Einsatz der Kabeltrommel 19 vorgesehen. Dabei ist die Kabeltrommel 19 als komplettes Modul ausgeführt, das nur noch in den Hohlraum 5 eingeschoben wird und nach dem Schließen bzw. Verrasten des Deckels 7 bereits für einen Einsatz fertig fixiert ist. Das Anschlußelement ist darauf eingerichtet, auch mit der Kabeltrommel 19 verbunden zu werden. Damit ist der Hohlraum insgesamt mit einer inneren Kontur und sonstigen Vorrichtungen versehen, die wahlweise eine Belegung mit einem losen Kabel 2 nach Figur 2 oder mit einer Kabeltrommel nach Figur 5. Beide Formen eines Energieversorgungsmittels werden in der Fertigung vorkonfektioniert angeliefert und können durch die erst nachfolgend durch den Deckel 7 verschlossene Öffnung des Hohlraums 5 eingesetzt und angeschlossen werden. Damit werden Vorteile wie eine in beiden Fällen schnelle Montage, Demontage zur Kabelauswechslung oder zur sonstigen Reparatur sowie eine einfache Typenumstellung oder Änderung der Ausstattung mit Komfortelementen eines Gerätes innerhalb einer Baureihe in der Produktion bewerkstelligt. Alle vorstehend genannten Arbeiten erfordern im Gegensatz zu Vorrichtungen nach dem Stand der Technik keine weitere Zerlegung des Gerätes 3.

Abschließend zeigt die Abbildung von Fig. 7 ein Gehäuseoberteil 21 eines Haushaltgerätes 3, hier einer elektromotorisch angetriebenen Küchenrühr- und Knetmaschine in einer Seitenansicht. Verdeckte Kanten innerhalb des Gehäuseoberteils 21 sind zur Darstellung des im Innern verfügbaren freien Raums mit eingezeichnet. Das Bodenstrukturteil 10 ist mit angedeuteter Montagerichtung mit bereits eingesetzter Kabeltrommel 19 skizziert. Wie bereits vorstehend beschrieben wird in diesem Ausführungsbeispiel eine Decke 22 als in der Einbaulage oberer Abschluß des Hohlraums 5 durch das Gehäuseoberteil 21 gebildet. Hierdurch wird ohne große oder durch die Verstrebungen 11 nicht kompensierbare Einbußen an mechanischer Stabilität weiterhin der Vorteil einer rundherum elektrisch isolierten Hohlraums 5 erhalten. Dabei wird das Bodenstrukturteil 11 hinsichtlich seiner Formgebung als Kunststoffspritzgußteil jedoch erheblich vereinfacht.

Durch die Ansicht von Figur 7 werden die Vorteile der gewählten Ausbildung einer erfindungsgemäßen Vorrichtung 1 in Form einer Bodenabdeckung des Gerätes 3 nochmals verdeutlicht: Auf das Gesamtdesign des Gerätes 3 wird kein Einfluß genommen und das Kabel 2 ist im Bereich einer Aufstandsfläche angeordnet, so dass es ohne Ausbildung von Schlaufen oder sonstiger Stolperfallen etc. direkt zu einer Steckdose geführt werden kann. Dabei ist noch anzumerken, dass es sich bei der Ansicht von Figur 7 um eine Rückansicht handelt, die in der Regel zu einer Wand hin gedreht, zumindest aber einem Betrachter abgewandt ist.

## Patentansprüche

1. Gehäuseteil (10) für ein elektrisches Gerät (3) zur flexiblen Aufnahme eines Elektrokabels für eine Energieversorgung des elektrischen Geräts,
wobei in dem Gehäuseteil (10) ein Hohlraum (5) vorgesehen ist, der zur wahlweisen Aufnahme eines losen Elektrokabels oder einer Kabeltrommel (19), die insbesondere als Modul ausgeführt ist, ausgebildet ist, und der durch einen Deckel (7) zum Aufklappen und/oder zum mindestens teilweisen Öffnen des Hohlraums (5) unter Bildung einer Kabelaustrittsöffnung (9) überdeckt und/oder nach außen hin verschlossen ist, wobei der Hohlraum (5) insbesondere als ganzer in einem Gehäuse (6) des Gerätes (3) ausgebildet ist,
wobei der Hohlraum (5) ein Anschlusselement (17) für das Elektrokabel (2) enthält, wobei das Anschlusselement (17) für das Elektrokabel ohne weitere Zerlegung des Gerätes (3) oder des Gehäuses (6) in dem Hohlraum (5) zugänglich ist, so dass der Hohlraum (5) wahlweise mit dem losen Elektrokabel oder der Kabeltrommel (19) als Modul belegt werden kann, wobei die Kabeltrommel (19) in den Hohlraum (5) eingeschoben werden kann und nach einem Schließen des Deckels (7) für einen Einsatz fixiert ist.

2. Gehäuseteil (10) nach Anspruch 1, **dadurch gekennzeichnet, dass** zur Fixierung des Deckels (7) Rastnasen (13) und korrespondierende Ausnehmungen (14) an dem Gehäuse (3) und/oder dem Deckel (7) vorgesehen sind.

3. Gehäuseteil (10) nach einem oder mehreren der vorhergehenden Ansprüche, **dadurch gekennzeichnet, dass** es sich beim dem Gehäuseteil (10) des Gerätes (3), in dem der Hohlraum (5) ausgebildet ist, um ein Bodenstrukturteil (10) handelt.

4. Gehäuseteil (10) nach einem oder mehreren der vorhergehenden Ansprüche, **dadurch gekennzeichnet, dass** der Hohlraum (5) zwischen Verstrebungen (11) derart ausgebildet ist, dass seine seitlichen Wände durch Verstrebungen (11) gebildet werden, wobei in einem zusammengebauten Zustand des Gehäuses (6) eine Decke als oberer Abschluß des Hohlraums (5) durch ein jeweiliges Oberteil (12) gebildet wird.

5. Gehäuseteil (10) nach einem oder mehreren der vorhergehenden Ansprüche, **dadurch gekennzeichnet, dass** der Deckel (7) als Teil einer Bodenabdeckung des Gerätes (3) ausgeführt ist.

6. Gehäuseteil (10) nach einem oder mehreren der vorhergehenden Ansprüche, **dadurch gekennzeichnet, dass** an einer Verstrebung (11) und/oder dem Deckel (7) Ausnehmungen, Führungen und/oder Positionierungshilfen für den Einsatz einer Kabeltrommel (19) vorgesehen sind.

## Claims

1. Housing part (10) for an electrical appliance (3) for flexible reception of an electric cable for energy supply of the electrical appliance,
wherein provided in the housing part (10) is a cavity (5), which is constructed for selectable reception of a loose electric cable or a cable drum (19), the drum being constructed as, in particular, a module, and which is covered by a cover (7) for opening up and/or at least partial opening of the cavity (5) with formation of a cable outlet opening (9) and/or is closed towards the outside, wherein the cavity (5) is formed, in particular, as a whole in a housing (6) of the appliance (3),
wherein the cavity (5) contains a connecting element (17) for the electric cable (2),
wherein the connecting element (17) for the electric cable is accessible in the cavity (5) without further breaking down of the appliance (3) or of the housing (6) so that the cavity (5) can be selectably occupied by the loose electric cable or the cable drum (19) as a module and
wherein the cable drum (19) can be pushed into the cavity (5) and after closing of the cover (7) is fixed for use.

2. Housing part (10) according to claim 1, **characterised in that** detent lugs (13) and corresponding recesses (14) are provided at the housing (3) and/or the cover (7) for fixing of the cover (7).

3. Housing part (10) according to one or more of the preceding claims, **characterised in that** the housing part (10), in which the cavity (5) is formed, of the appliance (3) is a base structure part (10).

4. Housing part (10) according to one or more of the preceding claims, **characterised in that** the cavity (5) is formed between bracing members (11) in such a manner that its lateral walls are formed by bracing members (11), wherein in an assembled state of the housing (6) a lid as upper closure of the cavity (5) is formed by a respective upper part (12).

5. Housing part (10) according to one or more of the preceding claims, **characterised in that** the cover (7) is constructed as part of a base cover of the appliance (3).

6. Housing part (10) according to one or more of the preceding claims, **characterised in that** recesses, guides and/or positioning aids for the use of a cable drum (19) are provided at a bracing member (11) and/or the cover (7).

## Revendications

1. Partie de boîtier (10) pour un appareil électrique (3) pour le logement flexible d'un câble électrique pour une alimentation en énergie de l'appareil électrique,
un espace creux (5) étant ménagé dans la partie de boîtier (10), lequel est réalisé pour le logement au choix d'un câble électrique mobile ou d'un tambour à câble (19) qui est notamment exécuté comme module, et lequel est recouvert par un couvercle (7) destiné à dégager et/ou ouvrir au moins en partie l'espace creux (5) en formant une ouverture de sortie de câble (9) et/ou est fermé vers l'extérieur, l'espace creux (5) étant notamment réalisé en entier dans un boîtier (6) de l'appareil (3),
l'espace creux (5) contenant un élément de raccordement (17) pour le câble électrique (2), l'élément de raccordement (17) pour le câble électrique étant accessible dans l'espace creux (5) sans autre démontage de l'appareil (3) ou du boîtier (6), de sorte que l'espace creux peut être occupé au choix par le câble électrique mobile ou le tambour à câble (19) exécuté comme module, le tambour à câble (19) pouvant être inséré dans l'espace creux (5) et étant fixé pour une utilisation après une fermeture du couvercle (7).

2. Partie de boîtier (10) selon la revendication 1, **caractérisée en ce que** des ergots d'arrêt (13) et des évidements correspondants (14) sont ménagés sur le boîtier (3) et/ou sur le couvercle (7) pour la fixation du couvercle (7).

3. Partie de boîtier (10) selon une ou plusieurs des revendications précédentes, **caractérisée en ce que** la partie de boîtier (10) de l'appareil (3), dans laquelle l'espace creux (5) est réalisé, est une pièce de structure de fond (10).

4. Partie de boîtier (10) selon une ou plusieurs des revendications précédentes, **caractérisée en ce que** l'espace creux (5) est réalisé entre des entretoisements (11) de manière à ce que ses parois latérales soient réalisées par des entretoisements (11), un plafond étant formé en tant que terminaison supérieure de l'espace creux (5) par une pièce supérieure respective (12) dans un état assemblé du boîtier (6).

5. Partie de boîtier (10) selon une ou plusieurs des revendications précédentes, **caractérisée en ce que** le couvercle (7) est réalisé comme une partie d'un recouvrement de fond de l'appareil (3).

6. Partie de boîtier (10) selon une ou plusieurs des revendications précédentes, **caractérisée en ce que** des évidements, des guidages et/ou des aides de positionnement sont ménagés sur un entretoisement (11) et/ou sur le couvercle (7) pour l'utilisation d'un tambour à câble (19).
